# EUROPÄISCHE PATENTANMELDUNG

(11) **EP 2 292 131 A2**
(43) Veröffentlichungstag der Anmeldung: **09.03.2011**
(21) Anmeldenummer: 10011345.5
(22) Anmeldetag: 18.03.2003
(51) Int. Cl.: A47L 15/00

(54) **Verfahren zum Betreiben einer Geschirrspülmaschine**

(30) Priorität: 16.05.2002 DE 10222215
(62) Teilanmeldung aus: 03006110.5
(71) Anmelder: Electrolux Home Products Corporation N.V., 1930 Zaventem (BE)
(72) Erfinder: Steiner, Winfried, 90491 Nürnberg (DE); Kohles, Karlheinz, 90461 Nürnberg (DE); Stahlmann, Rolf, 91639 Wolframs-Eschenbach (DE); Füglein, Stefan, 90427 Nürnberg (DE); Forst, Klaus-Martin, 89423 Peterswörth (DE)
(74) Vertreter: Röder, Richard

(57) **Zusammenfassung**

Die Erfindung betrifft ein Verfahren zum Betreiben einer Geschirrspülmaschine zum Reinigen darin eingestellten Spülgutes, wobei das Verfahren mehrere flüssigkeitsführende Programmabschnitte, einerseits mit erwärmter, andererseits mit kalter Spülflüssigkeit umfasst, wobei wenigstens teilweise im Verlauf eines Programmabschnittes mit kalter Spülflüssigkeit, welcher einem Programmabschnitt mit erwärmter Spülflüssigkeit folgt, die Umwälzung der Spülflüssigkeit durch wiederholtes Ein- und Ausschalten einer Umwälzpumpe im Sinne eines Impulsspülens mehrfach unterbrochen wird, und wobei infolge des Ein- und Ausschaltens der Umwälzpumpe ein Impulsspülen zumindest während eines flüssigkeitsführenden Programmabschnittes mit einem Verschnitt von verschmutzter Spülflüssigkeit aus dem vorhergehenden Programmabschnitt mit frisch zugeführter Spülflüssigkeit durchgeführt wird.

## Beschreibung

Die Erfindung betrifft ein Verfahren zum Betreiben einer Geschirrspülmaschine gemäß dem Oberbegriff des Anspruches 1.

Bekannterweise wird nach einem Einstellen von verschmutztem Spülgut in eine Geschirrspülmaschine in dafür vorgesehene Aufnahmen, wie z. B. Geschirrkörbe und Besteckkörbe, ein Spülprogramm zum Betreiben der Geschirrspülmaschine durch den Benutzer gestartet. Sind für den Betrieb der Geschirrspülmaschine mehrere verschiedene Spülprogramme vorgesehen, so kann der Benutzer im Allgemeinen durch Auswahlmittel, welche z. B. in einer Bedienblende an der Geschirrspülmaschine angeordnet sind, ein bestimmtes Spülprogramm auswählen. So sind z. B. Spülprogramme unter den Namen Intensivprogramm, Kurzprogramm, Normalprogramm, Sparprogramm und ähnlichen Begriffsbildungen bekannt. Bekannterweise umfasst ein Spülprogramm zumindest mehrere flüssigkeitsführende Verfahrensabschnitte, wie Vorspülen, Reinigen, Zwischenspülen, Klarspülen oder Vorspülen, Reinigen, Klarspülen je mit einem abschließenden nicht flüssigkeitsführenden Abschnitt Trocknen. Im Programmabschnitt Vorspülen findet hauptsächlich ein Einweichen fest anhaftender Spülpartikel am Spülgut und eine mechanische Reinigung leicht ablösbarer Verunreinigungen vom Spülgut statt. In diesem Programmabschnitt werden in der Regel keine chemischen Substanzen zur Verbesserung des Spülergebnisses zudosiert. Im Programmabschnitt Reinigen werden bekannterweise Waschsubstanzen zugesetzt, die entweder nur Substanzen zum An- und Auflösen der anhaftenden Schmutzpartikel während des Programmabschnittes Reinigen beinhalten oder aber in einem Kombinationspräparat, welches eine Waschsubstanz, eine Klarspülersubstanz und eine Enthärtersubstanz umfasst, als sogenannte 3in1-Tabs oder 3in1-Pulver zugesetzt. Im Programmabschnitt Reinigen werden hauptsächlich die am Spülgut anhaftenden Schmutzpartikel entfernt. In einem folgenden Programmabschnitt Zwischenspülen werden letzte Rückstände sowohl von Schmutzpartikeln als auch von chemischen Rückständen der Waschsubstanz entfernt. Durch den Programmabschnitt Klarspülen wird fleckenfreies Abtrocknen des Spülgutes vorbereitet. Der zugesetzte Klarspüler hat bekanntlich die Aufgabe, die Oberflächenspannung des Wassers zu verringern und somit ein besseres Abtropfen des anhaftenden Wassers am Spülgut zu ermöglichen. Im Programmabschnitt Trocknen wird das am Spülgut anhaftende Wasser aus den spülflüssigkeitsführenden Verfahrensabschnitten und die Restfeuchte aus den spülflüssigkeitsführenden Verfahrensabschnitten entfernt.

Für jeden dieser Programmabläufe ist charakteristisch, dass mehrere spülflüssigkeitsführende Programmabschnitte hintereinander geschaltet sind und das Programm durch einen nicht spülflüssigkeitsführenden Programmabschnitt Trocknen beendet wird. Als Programmabschnitte folgen, wie vorstehend geschildert, zumindest jeweils ein Vorspülen, Reinigen, ggf. Zwischenspülen, Klarspülen aufeinander. Wird das Zwischenspülen, wie beispielsweise in der EP 0 553 803 B1 offenbart, weggelassen, so besteht die Gefahr, dass chemische Rückstände an den Spülgutteilen zurückbleiben können, wie in Laborversuchen bereits festgestellt wurde. Ein Ausführen des Zwischenspülganges in bekannter Weise mit kalter Spülflüssigkeit entzieht dem Spülbehälter thermische Energie, die im vorangegangenen Reinigungsgang mit heißer Spülflüssigkeit aufgebaut wurde. Diese thermische Energie muss im nachfolgenden Klarspülgang für die Wirksamkeit des Klarspülers wieder zugesetzt werden, so dass insgesamt ein zu hoher Energieverbrauch zu beklagen ist. Ein Ausführen des Zwischenspülganges stattdessen mit aufgeheizter Spülflüssigkeit, um den Energieentzug zu verhindern, erfordert aber ebenfalls den Einsatz von Heizleistung.

Ausgehend von dem geschilderten Stand der Technik ist es Aufgabe der Erfindung ein Verfahren zum Betreiben einer Geschirrspülmaschine vorzuschlagen, bei dem der vorstehend genannte Nachteil vermieden wird und der Energieverbrauch besonders niedrig gehalten ist.

Vorstehend genannte Aufgabe wird durch ein Verfahren zum Betreiben einer Geschirrspülmaschine gemäß dem Kennzeichen des Anspruches 1 gelöst.

Vorteilhafte Ausgestaltung der Erfindung sind in den Unteransprüchen beschrieben.

Gemäß der vorliegenden Erfindung ist bei einem Verfahren zum Betreiben einer Geschirrspülmaschine zum Zwecke der Reinigung darin eingestellten Spülgutes zumindest teilweise im Verlauf eines flüssigkeitsführenden Programmabschnittes mit kalter Spülflüssigkeit, welcher einem Programmabschnitt mit erwärmter Spülflüssigkeit folgt, die Umwälzung der in der Geschirrspülmaschine befindlichen Spülflüssigkeit durch wiederholtes Ein- und Ausschalten der Umwälzpumpe mehrfach unterbrochen. Durch die Unterbrechung des Umwälzens der Spülflüssigkeit ist das in Bezug auf eine gleich lange Dauer ununterbrochenen Beaufschlagens mit Spülflüssigkeit summarisch mit dem Spülgut in Kontakt tretende Spülflüssigkeitsvolumen als auch die Kontaktzeit der Spülflüssigkeit mit dem Spülgut reduziert. Hierbei ist vorteilhaft, dass die Energieabgabe des aufgeheizten Spülgutes in einem Programmabschnitt, der frische und damit zuleitungstemperaturabhängige, kalte und/oder passiv aufgeheizte lauwarme Spülflüssigkeit zuführt, an die Spülflüssigkeit reduziert wird. In den Sprühpausen kann nämlich die vorher aufgebrachte Spülflüssigkeit zusammen mit mitgenommenen Schmutz- und ggf. Reinigungsmittelrückständen abtropfen, ohne dass in dieser Zeit durch permanentes Weitersprühen thermische Energie abgezogen wird.

Infolge des Ein- und Ausschaltens der Umwälzpumpe verändert sich das Rotationsverhalten der Sprüharme, die im Wesentlichen dem Muster des Ein- und Ausschaltens der Umwälzpumpe folgen, weil sie durch eine Antriebsdüse in Bewegung gesetzt und gehalten werden. Der Sprüharm wird während der Einschaltdauer um einen bestimmten Winkel alpha in seiner Rotationsebene bewegt und bremst seine kreisförmige Bewegung beim Ausschalten ab. Durch wiederholtes Ein- und Ausschalten verringert sich, bei einer gleich bleibenden Drehzahl der Umwälzpumpe infolge des Einflusses der Massenträgheit, die Umdrehungsgeschwindigkeit des Sprüharmes etwas. In Abhängigkeit einer gewünschten Umdrehungsgeschwindigkeit des Sprüharmes und einer gewünschten Benetzung des eingestellten Spülgutes mit Spülflüssigkeit wird bevorzugt die Dauer des Ein- und Ausschaltens der Umwälzpumpe variiert vorgegeben. Hierbei ist es z. B. alternativ möglich, die Beladungsmenge des Geschirrspülers zu berücksichtigen, sofern eine Ermittlung der Beladungsmenge durchgeführt wird.

Mit besonderem Vorteil wird das Ein- und Ausschalten der Umwälzpumpe mehrfach aufeinander folgend bei kurzer Dauer des Ein- und Ausschaltzustandes, wiederholt, so dass die Umdrehungsgeschwindigkeit des Sprüharmes, die Dauer des Beaufschlagens mit Spülflüssigkeit, welche im Wesentlichen von der Dauer des Einschaltzustandes der Pumpe abhängig sind, als auch das Bewegungsmuster des Sprüharmes, welcher abwechselnd beim Ausschalten der Pumpe abbremst oder steht und beim Einschalten sich um einen vorbestimmbaren Winkelbereich weiterbewegt, periodisch wechselt. Laborversuche haben gezeigt, dass vorzugsweise die Dauer des Ein- und Ausschaltzustandes der Pumpe gleich lang zu wählen ist. Um die Kontaktzeit der Spülflüssigkeit mit dem Spülgut definiert zu verringern aber das Spülgut auch mindestens einmal zu benetzen, sollte dabei prinzipiell mindestens eine vollständige Umdrehung eines Sprüharmes um 360 DEG erfolgen. Somit ergibt sich eine entsprechende Mindestdauer des Einschaltzustandes in Gesamtsumme gemäß 360 DEG geteilt durch alpha, multipliziert mit der Dauer eines Einschaltzustandes. Wichtig ist jedoch, dass die Gesamtdauer des Einschaltens der Umwälzpumpe zumindest so lang gewählt wird, dass das gewünschte Spülergebnis des jeweiligen Programmabschnittes erreicht werden kann.

Besonders bevorzugt wird ein abwechselndes Ein- und Ausschalten der Umwälzpumpe mit einer Einschaltdauer, die zwischen 1 bis 10 Sekunden und einer Ausschaltdauer, die zwischen 1 bis 15 Sekunden andauert.

Um sowohl den Wasserverbrauch als auch den Energieverbrauch besonders gut hinsichtlich eines besonders guten Spülergebnisses aufeinander abzustimmen, wird die Anzahl der Wechsel des Ein- und Ausschaltens der Umwälzpumpe und/oder deren Dauer so definiert, dass zum einen ermöglicht ist, die Kontaktzeit der umgewälzten Spülflüssigkeit mit dem zu reinigenden Spülgut zu reduzieren und dass zum anderen die Abhängigkeit der verschiedenen Verschmutzungsgrade des Spülgutes berücksichtigt ist. Sind durch verschiedene Sensoren Messparameter, wie die Trübung der Spülflüssigkeit während des Ablaufes des Spülprogramms, auch der pH-Wert und andere Messparameter erfassbar, so kann durch die Steuerung des Geschirrspülers die Anzahl der Wechsel des Ein- und Ausschaltens als auch deren Dauer variiert werden. Dies ist besonders sinnvoll, wenn anzunehmen ist, dass unterschiedliche Typen von Kombinationspräparaten mit mehreren Wirkstoffen dem Spülprogramm als chemische Substanzen zugesetzt werden. Denn Kombinationspräparate, die nach einem Verdünnungsprinzip eines umfassten Klarspülers arbeiten, d. h. der Klarspüler wird in den Klarspülabschnitt im Wesentlichen aus dem vorhergehenden Reinigen, ggf. Zwischenspülen verschleppt und verdünnt, werden bevorzugt mit weniger Spülflüssigkeit während der Programmabschnitte, die für den Klarspüler Verdünnungsphasen darstellen, betrieben, als Kombinationspräparate, deren Klarspülersubstanz erst temperatur- und/oder pH-Wertabhängig im Programmabschnitt Klarspülen aufgelöst werden. Infolge der verringerten Kontaktzeit der Spülflüssigkeit mit dem Spülgut, verringern sich die Abkühlvorgänge des Spülgutes, die besonders energetisch ungünstig sind, wenn kalte Spülflüssigkeit dem Geschirrspüler zugeführt wird und diese sich nur passiv u. a. am aufgeheizten Spülgut erwärmt.

Um ein gutes Reinigungsergebnis zu erzielen ist es erforderlich, dass das in die Geschirrspülmaschine eingestellte Spülgut ausreichend mit Spülflüssigkeit beaufschlagt wird. Hierzu muss der Sprüharm sich zumindest insgesamt einmal vollständig um seine Rotationsachse, d, h. um 360 DEG in seiner Rotationsebene, gedreht haben.

Durch das wiederholte Ein- und Ausschalten der Umwälzpumpe entsteht ein impulsartiges Beaufschlagen des Spülgutes mit Spülflüssigkeit. Diese Art des Aufbringens der umgewälzten Spülflüssigkeit wird mit einem Verschnitt von verschmutzter Spülflüssigkeit aus dem vorher gehenden Programmabschnitt mit frisch zugeführter Spülflüssigkeit durchgeführt. Dies hat insbesondere auch eine Einsparung von Wasser zur Folge. Die aufgenommene Energie der verdünnten Spülflüssigkeit, die durch die Verdünnung weniger verschmutzt ist, bleibt dem System des Geschirrspülers zumindest teilweise erhalten, so dass nach dem Verschnitt mit frischer Spülflüssigkeit eine höhere Mischtemperatur der Spülflüssigkeit vorhanden ist, als wenn dem Geschirrspüler vollständig frische Spülflüssigkeit, die im Wesentlichen zuleitungstemperaturabhängig ist, zugeführt wird. Das Verhältnis der Verschnittmengen, d. h. das Bestimmen des Volumens der abzupumpenden und frisch zugeführten Spülflüssigkeit, kann in Abhängigkeit der Drehzahl der Umwälzpumpe, des Verhältnisses der Impulsdauer des Ein- und Ausschaltens der Umwälzpumpe als auch einem vorgebbaren minimalen Füllstandsniveau der Spülflüssigkeit im Spülbehälter, besonders unter wassereinsparenden und energetischen Gesichtspunkten, minimiert werden. So ist es z. B. sinnvoll, bei einem Gesamtfüllvolumen mit Spülflüssigkeit, das im Programmabschnitt Reinigen bzgl. eines oberen maximalen Spülflüssigkeitsvolumen bei ca. 4 l (12 Normgedecke) zur kontinuierlichen Beaufschlagung des Spülgutes bemessen ist, dass im Programmabschnitt Zwischenspülen, in dem ein Impulsspülen der o. g. Art durchführt wird, das maximale Spülflüssigkeitsvolumen zu verringern. Denn infolge des Ein- und Ausschaltens der Umwälzpumpe wird weniger Spülflüssigkeit zum Beaufschlagen des Spülgutes benötigt. Wird das Volumen hierdurch reduziert, reduziert sich natürlich auch dessen Energieaufnahme. Dies ist mit besonders hohen Energieeinsparungen verbunden, wenn kalte Spülflüssigkeit zugeführt wird. Je länger das Ausschalten dauert, desto mehr umgewälzte Spülflüssigkeit kann vom Spülgut und den Wänden und der Decke des Spülbehälters während des Ausschaltens der Umwälzpumpe abtropfen, so dass durch einen kürzeren Einschaltzustand als Ausschaltzustand der Pumpe insgesamt sich das maximal notwendige Spülflüssigkeitsvolumen nochmals etwas reduziert. Es sei hier ferner erwähnt, dass infolge der Reduzierung des Spülflüssigkeitsvolumens die Verdünnung, insbesondere der gelösten Substanzen eines Kombinationspräparates, verringert wird. In Abhängigkeit verschiedener Messungen durch Sensoren kann somit auch auf das Lösungsverhalten bzw. die Konzentration der Substanzen Einfluss genommen werden.

Ist zumindest eine Trübungsmessung durch einen vorgesehenen Trübungssensor während eines Verfahrensabschnittes vorgesehen, so kann das Volumen der abzupumpenden und wieder zuzuführenden Spülflüssigkeit vorteilhaft in Abhängigkeit des Verschmutzungsgrades getroffen werden. Dies verbessert das Reinigungsergebnis und senkt den Energieverbrauch und den Wasserverbrauch weiter.

Wird ein Programm in der Abfolge der flüssigkeitsführenden Programmabschnitte Vorspülen, Reinigen, Zwischenspülen, Klarspülen betrieben, so ist es hinsichtlich der Verbesserung des Wasser- und Energieverbrauches als auch im Hinblick auf ein besonders gutes Spülergebnis sinnvoll, vorzugsweise nur das Zwischenspülen in der vorstehend beschriebenen Art des Impulsspülens zu betreiben. Denn in dieser Phase wird aufgrund des passiven Aufheizens der Spülflüssigkeit den Wärmekapazitäten des Geschirrspülers die größte Energie entzogen und das erforderliche Volumen Spülflüssigkeit, das nur zum Abspülen letzter Schmutzpartikel und chemischer Rückstände während des voran gehenden Programmabschnittes Reinigen ausreichend bemessen sein muss, erfordert eine gegenüber den Programmabschnitten, Vorspülen, Reinigen und Klarspülen wesentlich geringeres Gesamtvolumen an Spülflüssigkeit. Soll das Impulsspülen auch in den Verfahrensabschnitten Vorspülen, Reinigen und Klarspülen eingesetzt werden, so ist eine Verlängerung dieser Programmabschnitte zum Erreichen eines guten Spülergebnisses, insbesondere für das An- und Ablösen der Schmutzpartikel bzw. zum Aufheizen des Spülgutes, unabdingbar.

In Abhängigkeit des Lösungsverhaltens eines Klarspülers in einem Kombinationspräparat kann es für das Ergebnis des Trocknens vorteilhaft sein, in einem Teilabschnitt des Zwischenspülens vorgesehene Heizmittel, insbesondere am Ende des Zwischenspülens, kurzfristig einzuschalten, vor allem dann, wenn dieser Verfahrensabschnitt durch einen Verdünnungsschritt beendet wird, so dass die vorgeheizte Spülflüssigkeit, zumindest teilweise, im darauf folgenden Verfahrensabschnitt Klarspülen vorgeheizt ist, so dass ein pH-Wert- und temperaturabhängig auflösender Klarspüler schneller aufgelöst und somit länger während des Programmabschnittes Klarspülen umgewälzt wird.

Die Erfindung ist im Folgenden anhand der Zeichnungen eines Ausführungsbeispieles näher erläutert. Dabei zeigen:
Fig. 1 einen zeitlichen Ablauf eines Spülprogramms mit den Programmabschnitten Vorspülen mit einem Verdünnungsschritt, Reinigen, Zwischenspülen mit einem Verdünnungsschritt, Klarspülen;
Fig. 2 ein zum Zeitverlauf der Fig. 1 korrespondierendes Impulsmuster des Ein- und Ausschaltzustandes der Umwälzpumpe; und
Fig. 3 ine alternative Impulsfolge des Ein- und

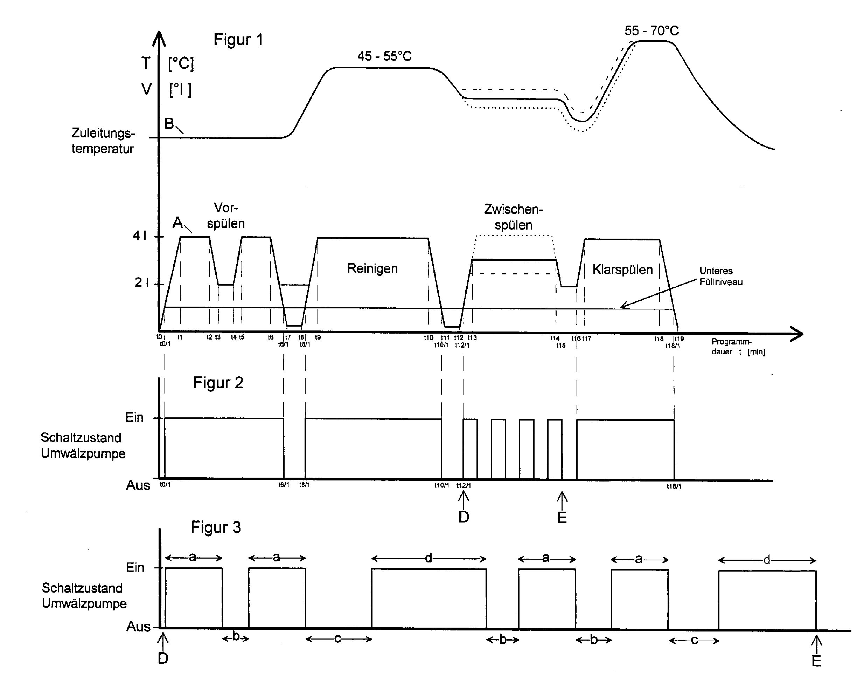

Ausschaltzustandes der Umwälzpumpe gemäss Abschnitt D-E in Fig. 2.

In einer Haushalt-Geschirrspülmaschine ist Spülgut mittels eines wählbaren Spülprogramms reinigbar. Ein besonders sparsames Spülprogramm mit besonders geringem Energieverbrauch ist im Folgenden skizziert.

Auf der Ordinate der Fig. 1 ist nicht maßstäblich die Zeit t in Minuten [min] aufgetragen, die Abszisse zeigt nicht maßstäblich ein im Spülbehälter vorhandenes Spülflüssigkeitsvolumen in Litern [l] und die Temperatur der Spülflüssigkeit in Grad Celsius. Kurve A zeigt das Schema eines Verlaufes der im Spülbehälter vorhandenen Spülflüssigkeit, in Kurve B ist der dazu annähernde Temperaturverlauf der Spülflüssigkeit angezeigt, der im Wesentlichen durch das Zuschalten vorgesehener Heizmittel bestimmt ist, Temperaturänderungen infolge der Energieentnahme von Wärmekapazitäten, Einflüsse von Temperaturschwankungen in der Umgebung sind nur tendenziell dargestellt. Zu einem Zeitpunkt t0 beginnt das Füllen des Spülbehälters mit Spülflüssigkeit und erreicht zu einem Zeitpunkt t0/1 im Sumpf der Geschirrspülmaschine ein definiertes Mindestvolumen, welches einem unteren Füllniveau entspricht. Bei diesem Füllniveau saugt die Umwälzpumpe keine Luft an. Das Füllen des Spülbehälters wird zu einem Zeitpunkt t1 beendet. Zum Zeitpunkt t0/1 wird die Spülflüssigkeit infolge des Einschaltens der Umwälzpumpe im Spülbehälter umgewälzt wie in Fig 2, deren Verlauf zu Kurve A der Fig. 1 korrespondiert, gezeigt. Dabei wird die Spülflüssigkeit über die Zuleitung, ggf. unter Berücksichtigung verschiedener Schaltzustände von Schaltventilen in den Zuleitungen zu einzelnen Sprüharmen, ggf. in eine Deckensprühvorrichtung gedrückt und von dort aus das Spülgut mit Spülflüssigkeit beaufschlagt. Zu einem Zeitpunkt t2 wird ein Teilvolumen der umgewälzten Spülflüssigkeit aus dem Spülbehälter abgepumpt und nach einer Totzeit t3 - t4, die sich im Wesentlichen durch das Widerauffüllen von Vorratsgefäßen für Spülflüssigkeit bzw. dem Zuleitungsweg zum Sumpf begründet ist, ab dem Zeitpunkt t4 wieder aufgefüllt. Zu einem Zeitpunkt t5 hat das Spülflüssigkeitsvolumen das ursprünglich maximale Füllvolumen von ca. 4 1 wieder erreicht und wird weiterhin umgewälzt. Im Zeitraum t2 bis t5 wurde somit ein Verdünnungsschritt hinsichtlich des Verschmutzungsgrades der Spülflüssigkeit ausgeführt. Zu einem Zeitpunkt t6 beginnt das Abpumpen der Spülflüssigkeit. Zum Zeitpunkt t6/1 muss wegen Erreichen des unteren Füllniveaus die Umwälzpumpe ausgeschaltet werden (vgl. Fig 2), damit die Umwälzpumpe keine Luft ansaugt, somit ist das Beaufschlagen des Spülgutes mit Spülflüssigkeit unterbrochen. Bis zum Zeitpunkt t7 ist die Spülflüssigkeit aus dem Spülbehälter nahezu vollständig entleert. Nach einer erneuten Totzeit t7 bis t8 wird im Zeitabschnitt t8 bis t9 erneut Spülflüssigkeit zugeführt. Innerhalb dieses Intervalls erreicht zu einem Zeitpunkt t8/1 das Spülflüssigkeitsniveau sein minimal erforderliches unteres Füllniveau, die Umwälzpumpe wird wieder eingeschaltet, mit der Folge, dass erneut im Programmabschnitt Reinigen im Zeitabschnitt t8/1 bis t10/1 das Spülgut mit Spülflüssigkeit beaufschlagt wird. Dabei erreicht bei t9 das Spülflüssigkeitsvolumen sein ursprünglich maximales Volumen von 4 1, zum Zeitpunkt t10 setzt das Abpumpen ein und ist nach Ausschalten der Umwälzpumpe zum Zeitpunkt t10/1 (vgl. Fig. 2) zum Zeitpunkt t11 nahezu vollständig aus dem Spülbehälter entfernt. Nach einer abermaligen Totzeit t11 bis t12 wird dem Sumpf der Geschirrspülmaschine erneut zum Zeitpunkt t12 Spülflüssigkeit zugefügt. Wiederum wird im Zeitpunkt t12/1 das untere Füllniveau erreicht, so dass im nunmehrigen Programmabschnitt Zwischenspülen die Umwälzpumpe wieder eingeschaltet (vgl. Fig. 2) und damit das Spülgut wieder mit Spülflüssigkeit beaufschlagt wird. Durch mehrfaches Ein- und Ausschalten der Umwälzpumpe ist das zum Zeitpunkt t13 zugeführte maximale Spülflüssigkeitsvolumen gegenüber den vorherigen Programmabschnitten verringert. Die punktierten und strichtierten Darstellungen deuten die variable Vorgabe des Spülflüssigkeitsvolumens an. Zum Zeitpunkt t14 findet ein Verdünnungsschritt (t14 bis t17) analog zum Vorspülen nur mit einer verringerten Abpumpmenge im Zeitabschnitt t14 bis t15 und demzufolge verringerten frisch zuzuführenden Spülflüssigkeitsvolumen im Zeitabschnitt t16 und t17 statt. Da dabei das untere Füllniveau nicht unterschritten wird, kann die Umwälzpumpe beliebig zu einem Zeitpunkt zwischen t14 und t17 im Einschaltzustand bleiben. Im Ausführungsbespiel wird die Umwälzpumpe mehrfach ein- und ausgeschaltet, vgl. Fig. 2, wobei die Dauer des Ein- und Ausschaltzustandes gleichlang ist. Der Programmablauf geht während des Verdünnungsschrittes in das Klarspülen über. Im Ausführungsbeispiel wurde der Beginn des Klarspülens mit ursprünglich maximalem Spülflüssigkeitsvolumen zum Zeitpunkt t16 festgelegt.

Nach einer Umwälzdauer im Zeitabschnitt t16 und t18/1, dabei im Zeitabschnitt t17 - t18 bei maximal vorhandener Spülflüssigkeitsmenge von ca. 4 1, beginnt zum Zeitpunkt t18 das Abpumpen. Zum Zeitpunkt t18/1 wird das untere Füllniveau unterschritten, so dass spätestens zu diesem Zeitpunkt die Umwälzpumpe ausgeschaltet wird, vgl. Fig. 2. Zum Zeitpunkt t19 ist die im Spülbehälter vorhandene Spülflüssigkeit nahezu abgepumpt. Verbleibende Restmengen infolge von Dampf und Wassertropfen an Spülbehälterwänden, Decke und dem Spülgut sind hier nicht gezeigt. Sie werden im darauf folgenden, ebenfalls nicht gezeigten Trocknungsgang entfernt.

Der Temperaturverlauf der Spülflüssigkeit, gezeigt in Kurve B, korrespondierend zu Kurve A, ist im Vorspülen zunächst im Wesentlichen abhängig von der Zulauftemperatur des Wasser. Durch Aufheizen infolge zugeschalteter Heizmittel im Programmabschnitt Reinigen wird die Spülflüssigkeit auf ca. 45 bis 55 DEG C erwärmt. Auch der gesamte Spülbehälter und das eingebrachte Spülgut nehmen diesen Temperaturwert an. Durch Zufuhr im Wesentlichen zuleitungstemperaturabhängiger Spülflüssigkeit zu Beginn des Programmabschnittes Zwischenspülen nach vorherigem Abpumpen der heißen Reinigungsflüssigkeit wird die Spülflüssigkeit durch Entnahme von Energie aus den Wärmekapazitäten des Spülbehälters passiv aufgeheizt, ein Zuschalten der vorgesehenen Heizmittel erfolgt nicht. Infolge des im Zwischenspülen geringeren Spülflüssigkeitsvolumens bleibt die Temperatur in diesem Programmabschnitt etwas höher gegenüber einer punktiert dargestellten Spülflüssigkeitsmenge, dargestellt in Kurve A ebenfalls punktiert dargestellt, die vergleichsweise dasselbe Volumen wie in den Programmabschnitten Reinigen und Vorspülen aufweist. Demzufolge steigt im Verdünnungsschritt t14 bis t17 die Temperatur des reduzierten maximalen Spülflüssigkeitsvolumen schneller wieder an und erreicht infolge des Aufheizens durch Zuschalten vorgesehener Heizmittel während des Klarspülens eine maximale Temperatur von ca. 55 bis 70 DEG C. Für ein nochmals verringertes Spülflüssigkeitsvolumen strichiert in Kurve A und B, ist die Mischungstemperatur am höchsten und die maximale Temperatur im Klarspülen wird demzufolge am schnellsten erreicht. Diese Temperatur nimmt im nachgeschalteten, nicht dargestellten Programmabschnitt Kondensationstrocknen kontinuierlich ab.

In Fig. 3 ist eine Variante der Impulsfolge gemäß Ausschnitt, mit Pfeilen D - E in Fig. 2 markiert, des Pulsmusters zum Ein- und Ausschalten der Umwälzpumpe in verschiedenen Varianten dargestellt. Während in Fig. 2, Abschnitt D - E, die Impulsfolge periodisch bei gleichlanger Ein- und Ausschaltdauer der Umwälzpumpe dargestellt und dementsprechend auch ausgeführt ist, zeigt Fig. 3 eine von vielen alternativen Impulsfolgen der Ein/Ausschaltzustände der Umwälzpumpe. Die Umwälzpumpe wird für eine Zeitdauer a eingeschaltet und ein für eine Zeitdauer b, welche kleiner als die Einschaltdauer a ist ausgeschaltet. Es folgt ein erneutes Einschalten für eine Zeitdauer a und ein Ausschalten für eine Zeitdauer c, wobei die Ausschaltdauer nunmehr im wesentlichen der vorherigen Einschaltdauer a entspricht. Das darauf folgende Einschalten erfolgt für eine Zeitdauer d, die im wesentlichen der Summe von zwei Einschaltzuständen a entspricht. Nach dem Ausschaltzustand b wiederholt sich die unregelmäßige Abfolge des Pulsmusters. Die mit dem selben Buchstaben benannten Schaltzustände haben jeweils gleiche Zeitdauer, im Ausführungsbeispiel ist die Dauer a kleiner als Dauer d und größer als Dauer b und genauso lang wie Dauer c.

Der Zeitabschnitt des Einschaltzustandes kann in weiterer Variationsmöglichkeit gegenüber dem Zeitabschnitt des Ausschaltzustandes verringert oder vergrößert werden, neben der periodischen Anordnung ist auch eine Periode hintereinander geschalteter Pulse unterschiedlicher Dauer denkbar, die sich regelmäßig oder unregelmäßig verkürzen und/oder verlängern, so dass im Wesentlichen ein nicht periodisches Pulsmuster der Umwälzpumpe entsteht. Alternativ kann bei Erreichen einer bestimmten Pulswechselfrequenz die Pumpe automatisch abgeschaltet werden.

Weiter, die Erfindung nicht beschränkende Adaptions- und Variationsmöglichkeiten ergeben sich aus den parallelen Anmeldungen P-10026, Titel "Verfahren zum Betreiben einer Geschirrspülmaschine, Geschirrspülmaschine" vom 16.05.2002 und P-10078, Titel "Geschirrspülmaschine und Verfahren zum Betreiben einer Geschirrspülmaschine bei Verwendung von einem Kombinationspräparat mit mehreren Wirkstoffen" vom 16.05.2002.

## Patentansprüche

1. Verfahren zum Betreiben einer Geschirrspülmaschine zum Reinigen darin eingestellten Spülgutes, wobei das Verfahren mehrere flüssigkeitsführende Programmabschnitte, einerseits mit erwärmter, andererseits mit kalter Spülflüssigkeit umfasst, wobei wenigstens teilweise im Verlauf eines Programmabschnittes mit kalter Spülflüssigkeit, welcher einem Programmabschnitt mit erwärmter Spülflüssigkeit folgt, die Umwälzung der Spülflüssigkeit durch wiederholtes Ein- und Ausschalten einer Umwälzpumpe im Sinne eines Impulsspülens mehrfach unterbrochen wird, **dadurch gekennzeichnet, dass** infolge des Ein- und Ausschaltens der Umwälzpumpe ein Impulsspülen zumindest während eines flüssigkeitsführenden Programmabschnittes mit einem Verschnitt von verschmutzter Spülflüssigkeit aus dem vorhergehenden Programmabschnitt mit frisch zugeführter Spülflüssigkeit durchgeführt wird.

2. Verfahren zum Betreiben einer Geschirrspülmaschine nach Anspruch 1, **dadurch gekennzeichnet, dass** das Volumen der frisch zugeführten oder verschnittenen Spülflüssigkeit für das Impulsspülen bezüglich des Verhältnisses der Impulsdauer des Ein- und Ausschaltens der Umwälzpumpe und der Anzahl der Impulse, der vorgebbaren Drehzahl der Umwälzpumpe und/oder einem unteren vorgegebenen Füllniveau und/oder der Konzentration und des Lösungsverhaltens der zugegebenen chemischen Substanzen, insbesondere von Kombinationspräparaten mit mehreren Wirkstoffen, günstigst reduziert wird.

3. Verfahren zum Betreiben einer Geschirrspülmaschine nach zumindest einem der vorhergehenden Ansprüche, **dadurch gekennzeichnet, dass** zumindest das Volumen der abgepumpten und/oder zugeführten Spülflüssigkeit abhängig von zumindest einer Trübungsmessung während eines flüssigkeitsführenden Verfahrensabschnittes, vorzugsweise vor dem Impulsspülen, bestimmt wird.

4. Verfahren zum Betreiben einer Geschirrspülmaschine, nach zumindest einem der vorhergehenden Ansprüche Vorspülen, Reinigen, Zwischenspülen, Klarspülen der flüssigkeitsführenden Programmabschnitte, **dadurch gekennzeichnet, dass** zumindest ganz oder teilweise der Verfahrensabschnitt Zwischenspülen als Impulsspülen betrieben wird.

5. Verfahren zum Betreiben einer Geschirrspülmaschine nach einem der vorhergehenden Ansprüche, **dadurch gekennzeichnet, dass** die Umwälzpumpe für eine bestimmbare und/oder vorgebbare Dauer ein- und ausgeschaltet wird.

6. Verfahren zum Betreiben einer Geschirrspülmaschine nach zumindest einem der vorhergehenden Ansprüche, **dadurch gekennzeichnet, dass** der Sprüharm zumindest annähernd einmal vollständig um seine Rotationsachse gedreht wird und hierzu die Anzahl und Dauer der wiederholten Ein- und Ausschaltvorgänge der Umwälzpumpe entsprechend ausgelegt ist.

7. Verfahren zum Betreiben einer Geschirrspülmaschine nach einem der vorhergehenden Ansprüche, **dadurch gekennzeichnet, dass** die Dauer der Ein- und Ausschaltzustände der Pumpe kurz gewählt wird und wobei Ein- und Ausschaltzeiten vorzugsweise gleich groß sind.

8. Verfahren zum Betreiben einer Geschirrspülmaschine nach zumindest einem der vorstehenden Ansprüche, **dadurch gekennzeichnet, dass** die Einschaltdauer der Umwälzpumpe zwischen ca. 1 bis 10 Sekunden, und das Ausschalten der Umwälzpumpe ca. 1 bis 15 Sekunden beträgt.

9. Verfahren zum Betreiben einer Geschirrspülmaschine nach einem der vorhergehenden Ansprüche, **dadurch gekennzeichnet, dass** die Anzahl der Wechsel des Ein- und Ausschaltens der Umwälzpumpe und/oder deren Dauer so ausgelegt oder variiert wird, dass die **dadurch** erzielte Kontaktzeit der umgewälzten Spülflüssigkeit mit dem zu reinigenden Spülgut derart reduziert wird, dass Abkühlvorgänge des Spülgutes infolge des Kontaktes mit kalter oder lauwarmer Spülflüssigkeit minimiert und/oder die Konzentration und Löslichkeit der zugesetzten chemischen Substanzen berücksichtigt werden.
